Europäisches Patentamt

European Patent Office

Office européen des brevets

(11) Publication number: **0 307 190**
A2

# (12) EUROPEAN PATENT APPLICATION

(21) Application number: **88308281.0**

(22) Date of filing: **08.09.88**

(51) Int. Cl.⁴: **H 02 M 7/757**

(30) Priority: **09.09.87 GB 8721226**

(43) Date of publication of application:
**15.03.89 Bulletin 89/11**

(84) Designated Contracting States:
**CH DE ES GB IT LI SE**

(71) Applicant: **SWITCHED RELUCTANCE DRIVES LTD**
**Springfield House**
**Hyde Terrace Leeds LS2 9LN (GB)**

(72) Inventor: **Davis, R.M.**
**20 Burton Walk East Leake**
**Loughborough Leicestershire (GB)**

(74) Representative: **Robinson, Anthony John Metcalf et al**
**Kilburn & Strode 30 John Street**
**London, WC1N 2DD (GB)**

(54) **Bi-directional power conversion circuit.**

㊼ A power conversion circuit includes a rectifier/inverter (2) connected to an AC source/sink, a chopper which controls the direct current in the rectifier/inverter and path selection means which connect the chopper to the rectifier/inverter and to the fixed polarity DC sink/source whereby power may flow in either direction between the AC and DC terminals according to which path is selected under the control of the chopper acting either as a step-up flyback converter or step-down forward converter.

FIG 1

EP 0 307 190 A2

## Description

## Bi-directional Power Conversion Circuit

The present invention relates to rectifier/inverter circuits, and in particular to such a circuit in which a single fully controlled rectifier is used both for rectification and for inversion. The invention is particularly applicable to a circuit suitable for rectification into, and inversion from, a direct voltage sink/source of a fixed polarity.

Conventional rectifier circuits provide only one direction of direct current output, and hence for a fixed polarity of load voltage, power flow can proceed only from the AC source to the DC sink.

When the reversal of DC terminal polarity is impossible (for example when these terminals are directly connected to a battery or to a polarised capacitor), inversion from DC to AC cannot be carried out by the same rectifier even if it is fully controlled. It has therefore previously been necessary, in such situations, to use a second rectifier which must be fully controlled operating as an inverter to permit current flow in the opposite direction. The provision of a fully controlled rectifier just to perform the inversion duty is clearly a considerable extra complication and expense, particularly since it involves an additional smoothing inductor placed between the DC terminals of the inverter and the DC sink/source.

It is also necessary that for a given DC source voltage, the AC sink into which the inverter delivers its power should have a voltage greater than the AC source which supplies the rectifier (either comprised entirely of diodes or incorporating thyristors when operating with the preferred minimum delay angle). This involves the use of an additional step-up auto transformer at the AC terminals of the inverter.

In situations where the polarity of the DC terminals can be reversed, of course, the problem does not occur since provided the rectifier is fully controllable (for example is comprised entirely of thyristors or similar controllable uni-directional valves), both rectification and inversion is possible using one and the same rectifier/inverter circuit.

It is an object of the present invention invention to combine a single controllable rectifier/inverter circuit with path selection and repeating switching means and inductive energy storage means to form a bi-directional power conversion circuit capable of rectifying into and inverting from a fixed polarity direct voltage sink/source.

It is another object of the invention that one or more devices which perform the path selection may also perform the repeating switching function, thus providing a desirable economy of such devices.

It is another object of the invention to provide a cheap and convenient bi-directional power conversion circuit which requires only one inductor and which avoids the use of a step-up transformer for the inverter.

According to the present invention, a bi-directional power conversion circuit comprises a controllable rectifier/inverter coupled to AC terminals, repeating switching means interposed between the rectifier/inverter and DC terminals, and selectable switching means arranged further to couple the repeating switching means to the rectifier/inverter by a first pathway in a first switched mode and a second pathway in a second switched mode, whereby in the first mode the rectifier/inverter operates as a rectifier for power flow from the AC to the DC terminals, and in the second mode the rectifier/inverter operates as an inverter for power flow from the DC to the AC terminals, the polarity of the DC terminals being the same in each case.

Because of the extra control provided by the repeated switching action, a substantially constant mean voltage can be maintained at the DC terminals in spite of substantial reductions in the voltage at the AC terminals.

When the circuit operates as a rectifier, the improved stability of the voltage at the DC terminals may permit a more economic design for the equipment which takes its power from the said DC terminals. The use of the repeated switching means to achieve such stabilisation is however optional.

When a conventional inverter circuit is exposed to a substantial reduction of voltage at its AC terminals the inverter is likely to develop a fault due to the uncontrollable rise of the current within the circuit following a commutation failure upon the low voltage across the AC terminals.

The present invention attempts to overcome the problem of such a fault developing by virtue of the repeated switching means which controls the value of the direct current to the inverter in spite of the reduction of voltage at the AC terminals of the inverter. In the unlikely event of a commutation failure still occurring the repeating switching means may be used to interrupt the ensuing fault current, thus permitting the inverter's recovery from the commutation failure.

The present invention also permits the more gradual initial application of voltage to the DC terminals, for example where a capacitor at the DC terminals requires charging at a controllable rate.

A relatively constant mean voltage at the DC terminals enables the operating conditions for whatever equipment or machinery is to be powered from these terminal to be well defined. Consequently, it may be possible to dispense with additional features to guard against or accommodate voltage changes at the DC terminals which could damage the equipment or machinery or make it more expensive or complex.

The repeating switching means may comprise a chopper circuit, preferably one in which the chopper frequency and/or the mark-space ration is variable. This allows control of power flow from the AC terminals to the DC terminals, and vice versa, in conjunction with the selectable switching means.

The controllable rectifier/inverter preferably comprises a three-phase thyristor bridge, in which the delay angles or the thyristors are controllable so that the bridge can be operated either as a rectifier or as an inverter. Alternatively, a single-phase bridge could be used instead. Naturally, it would be equally possible to use any other type of controllable rectifier/inverter.

The selectable switching means also desirably act selectively to couple the rectifier/inverter via the first or second pathways, in the first and second modes respectively, directly to the respective DC terminals, thus permitting the repeating switching means to be operative for either direction of power flow if so desired.

In a convenient arrangement the selectable switching means includes a diode which completes the first pathway between the rectifier/inverter and the DC terminal and which permits power flow from the rectifier inverter to the DC terminals. The selectable switching means also includes a controllable switching device which completes the second pathway between the rectifier/inverter and the DC terminals and which permits power flow from the DC terminals to the inverter. The controllable switching device may be a transistor, a gate turn off thyristor or any other device capable of initiating and interrupting current. It could also be a thyristor or even a mechanical switch.

The repeating switching means is preferably arranged to provide control of the direct current in the pathways between the rectifier/inverter and the DC terminals. The repeating switching means are preferably arranged to switch off and on in response to an upper current level and a lower current level within the circuit. In such an arrangement, means may be provided for measuring the current level (or an associated signal representative thereof) within the circuit, and for operating the repeating switching means in response to the measured value. It is convenient for these means to operate in dependence upon the current passing through an inductor (or other inductive energy storage means) which provides the energy storage necessary for the control of power flow by the repeating switching means. Preferably, control means are provided for controlling or selecting the upper and lower current levels, for example in accordance with the desired power flow through the circuit.

In a particularly simple arrangement, only a single inductor is provided connected in series with the rectifier/inverter and carrying the same direct current as the rectifier/inverter at all times. The repeating switching means provides for this current to be switched between either of two devices, one being a transistor or other controllable uni-directional switch means, and the other being a diode or other uni-directional device. When the transistor is conducting, current in the inductor increases, and when the transistor is off the inductor current is diverted to flow through the diode.

When power flow is towards the DC terminals the charge on a capacitor at the DC terminals is replenished when the diode conducts but not when the transistor conducts.

When power flow is towards the AC terminals the charge on the capacitor is depleted when the transistor conducts but not when the diode conducts. In either case the transistor switching action may be used to control the power flow.

The circuit may include means for controlling the power flow for inversion or for both inversion and rectification. This may include, for example, means for altering the delay angle of the thyristors in a thyristor bridge, and/or means for controlling the frequency or mark-space ratio of the repeating switching means.

In an addition to the circuit, a contactor may be desirably positioned within the lines connecting the AC terminals to the rectifier/inverter. A load resistor or resistors or other static load may be positioned so that when the contactor connects the rectifier/inverter to the AC terminals, the load resistor is isolated but when the AC terminals are not connected to the rectifier/inverter the rectifier/inverter is connected to the load resistor or resistors. Such a resistor or resistors provides the ability to extract energy from the DC source, even in the absence, for example because of an electrical fault, of an AC sink.

Thus, the repeating switching means may permit controlled power flow, where this is desirable, from the direct voltage source to resistive energy dissipating means for use when the AC sink is disconnected or incapable of accepting the energy.

The circuit of the present invention is expected to find wide application in situations where it is required to exchange power between an AC supply and a fixed polarity DC supply. It is likely to prove particularly useful in 2 or 4-quadrant variable-speed drives.

The invention may be carried into practice in a number of ways, and one specific circuit embodying the invention, and a modification thereof, will now be described with reference to the drawings, in which

> Figure 1 is a circuit diagram showing an embodiment of the invention;
> Figure 2 is a circuit diagram showing a modification of the circuit of Figure 1;
> Figure 3 shows a typical prior art AC source current waveform; and
> Figure 4 shows a typical AC source current waveform for the circuits of Figures 1 and 2.

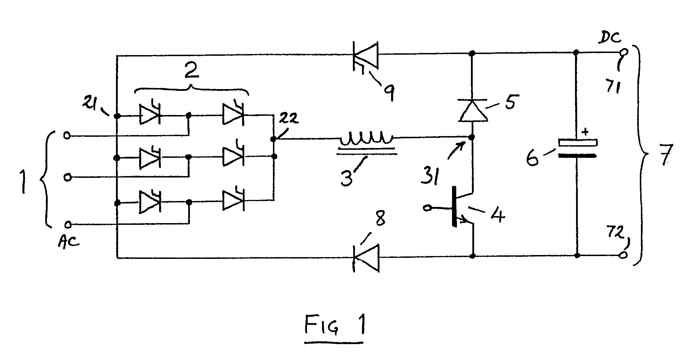

Figure 1 shows a bi-directional power conversion circuit according to one embodiment of the present invention. The circuit extends between three-phase AC terminals 1 and a pair of DC terminals 7. When the circuit is arranged to operate as a rectifier the AC terminals are connected to an AC source and the DC terminals to a DC sink. Conversely, when the circuit is arranged to operate as an inverter, the DC terminals are connected to a DC source and the AC terminals to an AC sink. In many cases, it is probable that the AC source can perform equally as an AC sink, and the DC sink can perform equally as a DC source.

The three-phase AC terminals 1 are connected to the AC terminals of a thyristor bridge configuration 2, one DC terminal 21 or which is connected through a thyristor 9 to the positive DC terminal 71, and via a diode 8 to the negative DC terminal 72. The other DC terminal 22 of the bridge is connected via an inductor 3 to an intermediate node 31 which is connected via a diode 5 to the positive DC terminal 71 and via a transistor 4 to the negative DC terminal 72. Across the DC terminals 7 there is a smoothing capacitor 6.

Although the circuit is shown as having three-phase AC terminals 1, and a corresponding three-phase bridge arrangement 2, it will be appreciated that a single phase operation using a well-known single phase bridge circuit is also possible.

In the embodiment shown the rectification/inversion is carried out by the bridge circuit 2, while the inductor 3, the transistor 4, and the diode 5 act to effect a rapid repeated switching action which controls the current through the inductor 3.

The operation of the circuit for power flow from and AC source to a DC sink will now be described. For operation in this mode, the thyristor 9 is maintained non-conducting, and the diode 8 conducts. The transistor 4 is then rapidly switched on and off at a rate substantially higher than the frequency of the AC source.

The bridge 2 operates as a rectifier, producing a positive voltage at 22 with respect to 21. When the transistor 4 is on, the rectifier output voltage causes current to increase in the loop comprising the bridge 2, the inductor 3, the transistor 4, and the diode 8. The current is allowed to increase until an upper level is reached, whereupon the transistor 4 is turned off. During this time, any charge on the capacitor 6 is decaying via the DC terminals 7 and the load (not shown) connected thereto.

When the transistor 4 is turned off, the current which would otherwise pass through it is transferred instead to the diode 5 and the capacitor 6. This recharges the capacitor. During this recharging period, the current in the loop 2, 3, 5, 6 and 8 decays, since the mean voltage across the DC terminals 7 is greater than that across the bridge 2. When a lower current level is reached, the transistor 4 is turned on again.

Essentially, the inductor 3, the transistor 4 and the diode 5 are operating as a step-up flyback converter, allowing power to flow from the AC terminals 1 to the DC terminals 7.

The means by which the current in the circuit is detected and compared with the upper and lower current levels to determine when the transistor 4 is to be switched on and off are well-known, and are accordingly not shown. It is convenient for these means to operate in dependence upon the current in the inductor 3.

In situations where the voltage at the DC terminals 7 is greater than the peak line-to-line voltage across the AC terminals 1, the power flow may be controlled either by varying the delay angle of the bridge 2, of by varying the mark-space ration of the transistor 4.

Alternatively, in situations where the voltage at the DC terminals 7 is lower than the peak line-to line voltage across the AC terminals 1, the transistor 4 may be left in a non-conducting state when the bridge 2 is rectifying. In this case, the voltage across the DC terminals 7 will be determined by the delay angle of the bridge 2, the AC supply impedance and the current drawn from the DC terminals 7. Control of the delay angle may therefore be used to control the voltage at the DC terminals 7, for example to compensate for variations in the voltage of the AC source. Of course, if the bridge 2 is being operated with zero delay angle, then the voltage at the DC terminals 7 will not be independently controllable.

Operation of the circuit for power flow from the DC source to the AC sink will now be described. For operation in this mode, the thyristor 9 is maintained conducting, and the diode 8 is thereby reverse biassed and hence non-conducting. The bridge 2 operates as an inverter with a delay angle greater than 90°. The transistor 4 is then rapidly switched on and off.

When the transistor 4 is on, current passes from the positive DC terminal 71, via the thyristor 9, the bridge 2, the inductor 3, and the transistor 4. Since the mean voltage across the DC terminals 7 is greater than the back emf across the bridge 2 (the bridge now operating as an inverter, so that its DC terminal polarity is the reverse of that for rectification) this current increases. When the current reaches an upper level, the transistor 4 is turned off.

The current that would otherwise have passed through the transistor is now diverted through the diode 5, and this causes a circulating current in the loop consisting of the diode 5, the thyristor 9 the bridge 2 and the inductor 3. Because of the back emf produced across the bridge 2, this current decays. When the current reaches a lower level, the transistor 4 is turned on again.

Effectively, the inductor 3, the transistor 4 and the diode 5 are operating as a step-down forward converter enabling power to flow from the DC terminals 7 to the AC terminals 1.

Once again, the means whereby the current is measured and compared with the upper and lower current levels to determine when the transistor 4 is to be switched on and off are standard and are not shown.

When the circuit is operating for power flow from the DC terminals to the AC terminals, the delay angle of the bridge 2 must be such that, when the transistor is on, current increases in the appropriate pathway. This means that the DC voltage across the terminals 7 must exceed the back emf across the bridge 2. This condition can be met either by allowing the DC voltage to increase, or by operating the bridge with a sufficiently small delay angle to keep the back emf to an appropriately lower value.

In either case, control of power flow from the DC terminals 7 to the AC terminals 1 may be effected either by varying the delay angle of the bridge 2 or by varying the mark-space ratio of the transistor 4.

The way in which the circuit may be operated when switching from forward to reverse power flow will now be described. When the current in the inductor 3 reaches the lower current level, the transistor is not switched back on. The current therefore continues to decay to substantially zero, at which point the diode 8 and the thyristors in the bridge 2 turn off and, after an appropriate recovery time, regain their forward blocking capability. Either concurrently with or after the decay of current in the inductor 3 the thyristors of the bridge 2 now have their firing pulses delayed to a delay angle suitable for inversion, typically about 150°. Firing pulses are then applied to the thyristor 9, and the transistor 4 switched on. This causes current to pass through the pathway used for reverse power flow, as described above.

Alternatively, thyristor 9 may have firing pulses applied as soon as the need for reverse power flow arises. The voltage across the capacitor 6 will force a reverse voltage across diode 8 as soon as thyristor 9 conducts and diode 8 is thereby extinguished. The firing pulses to the rectifier 2 should be delayed to typically 150° at the same time or shortly afterwards to prevent the current in inductor 3 becoming excessive.

The way in which the circuit may be operated to switch from reverse to forward power flow will now be described. When the current in the inductor 3 reaches the lower current level the transistor 4 is not switched back on thereby allowing the current to decay to substantially zero, causing the thyristor 9 to become non-conducting. After a delay to allow thyristor 9 to regain its forward blocking capability, the firing pulses for the bridge 2 are advanced to their normal position for rectification, typically a delay angle of zero degrees. The transistor 4 is then switched back on, and the current passes through the forward power flow pathways, as described above.

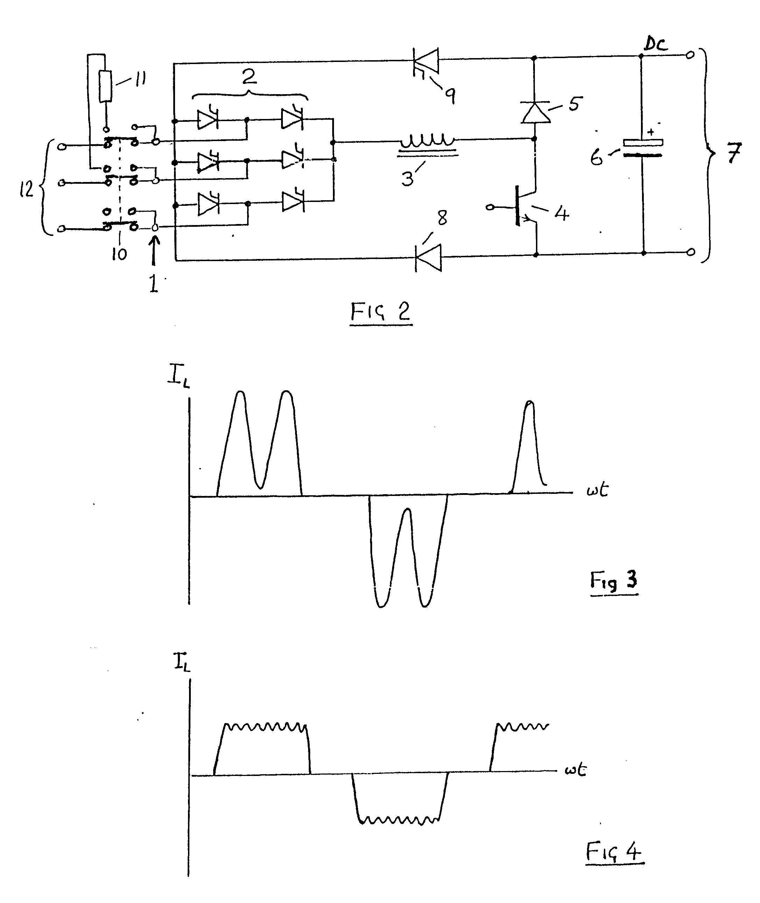

One advantage of the circuit of Figure 1 is the ability to maintain the current in the inductor between two levels which are not greatly dissimilar. As a result, the direct current supplied by the bridge 2, when acting as a rectifier, or supplied to the bridge 2, when acting as an inverter, has only a small ripple component. The ripple component will be particularly small if, as is advantageous, the switching frequency is appreciably higher than that of the AC source or sink. Accordingly, the harmonic content of the current drawn from or supplied to the AC source or sink is lower as may be seen from the typical waveform of the AC current which is shown in Figure 4, compared to that shown in Figure 3. This should be contrasted with the situation when an uncontrolled diode rectifier is being used to replenish the charge on a DC capacitor from which a load current is being drawn. In this case, the diode starts to conduct only when the line-to line voltage of the AC source which is feeding the rectifier exceeds the DC voltage across the capacitor. When he AC supply has a low impedance, and the capacitor has a high value (both of which are common) the current drawn from the AC source has a high peak value when compared with its half-cycle mean value. The harmonic amplitudes are thus appreciable, as may be seen from the typical prior art AC current shown in Figure 3.

Turning now to Figure 2, there is shown an addition to the circuit of Figure 1. This modification is particularly useful where it is required to be able to extract energy from a DC source, even in the absence (for example because of an electrical fault) of a corresponding AC sink.

For example, in many variable speed motor drive applications involving the use of a fixed polarity DC link having parallel smoothing capacitor, it is important to be able to use the motor as a brake, even in the event of loss of the AC sink/source. In this example, the energy produced by the motor acting as a brake is arranged to be dissipated in a dynamic braking resistor 11. This resistor may conveniently though not necessarily be connected between two of the AC terminals 1 by means of a change-over contactor 10. In motor drive applications; such a contactor, or a similar isolating device would, in any case, be required between the AC terminals 1 of the bridge 2 and the terminals of the AC source/sink 12.

While the AC sink is healthy, the bridge 2 can operate as an inverter exactly as has been previously described. If, however, the AC sink 12 becomes non-receptive, or is disconnected, this is likely to cause problems with the operation of the bridge 2, as will be described.

If the AC sink assumes a higher than normal impedance, it is probable that the next commutation between the thyristors of the bridge 2 will not be successfully completed, and this is likely to lead to a short circuit condition in which the two thyristors connected to the same AC line are both conducting together. To recover from this, the transistor 4 should be switched off, and should remain off until the current circulating in the loop comprising the bridge 2, the inductor 3, the diode 5 and the thyristor 9 has decayed sufficiently for the conducting thyristors to switch off and recover their blocking condition. At the same time, the contactor 10 is de-energised, thereby disconnecting the AC sink 12, and connecting the bridge 2 to the dynamic braking resistor 11. Dynamic braking current can now be established in the resistor 11 by switching on the transistor 4, the thyristor 9, and the appropriate pair of thyristors in the bridge 2. The level of this current can be controlled by the mark-space ratio of the transistor 4, as previously described.

Alternatively, if the AC sink becomes disconnected, the two conducting thyristors in the bridge 2 will cease to conduct. If this happens, the contactor 10 may be de-energised at once, thereby connecting the dynamic braking resistor and permitting the establishment of dynamic braking current as described above.

In alternative arrangements (not shown) the diode 8 in each of the embodiments can be replaced with a thyristor. In further alternative arrangements (not shown) the inductor 3 can be replaced with a short and the energy storage instead provided by three inductors placed one in each of the AC lines 1. In use, two out of the three conduct at any one time, with the non-conducting inductor periodically cycling between the three.

## Claims

1. A bi-directional power conversion circuit comprising a controllable rectifier/inverter (2) coupled to AC terminals (1), repeating switching means (4, 5) interposed between the rectifier/inverter (2) and DC terminals (7), and selectable switching means (8, 9) arranged further to couple the repeating switching means (4,5) to the rectifier/inverter (2) by a first pathway in a first switched mode and a second pathway in a second switched mode, whereby in the first mode the rectifier/inverter (2) operates as a rectifier for power flow from the AC to the DC terminals, and in the second mode the rectifier/inverter (2) operates as an inverter for power flow from the DC to the AC terminals, the polarity of the DC terminals (7) being the same in each case.

2. A circuit as claimed in Claim 1 in which the repeating switching means (4,5) comprises a chopper circuit.

3. A circuit as claimed in Claim 1 or Claim 2 in which the controllable rectifier/inverter comprises a thyristor bridge (2) with the delay angles of the thyristors being controllable.

4. A circuit as claimed in any one of the preceding claims in which the selectable switching means (8,9) are arranged to selectively couple the rectifier/inverter (2) via the first or second pathways, in the first and second modes respectively, directly to the respective DC terminals (7).

5. A circuit as claimed in Claim 4 in which the selectable switching means (8,9) comprises a uni-directional device in the first pathway and a controllable switching device in the second pathway.

6. A circuit as claimed in Claim 5 in which the uni-directional device is a diode (8) or a thyristor and the controllable switching device is a thyristor (9).

7. A circuit as claimed in any one of the preceding claims in which the repeating switching means includes inductive energy storage means.

8. A circuit as claimed in Claim 7 in which the inductive energy storage means comprises an inductor (3) connected in series with the rectifier/inverter (2).

9. A circuit as claimed in Claim 7 in which the inductive energy storage means comprise one or more inductors coupled to the AC terminals (1).

10. A circuit as claimed in any one of the preceding claims including means for measuring the current level, or a signal representative thereof, within the circuit and for operating the repeating switching means (4,5) in response to the measured value.

11. A circuit as claimed in Claim 10 including control means for controlling or selecting an upper current level and a lower current level, in accordance with the desired power flow through the circuit, the measuring and operating means being responsive to the said upper and lower levels.

12. A circuit as claimed in claim 10 and claim 8 or as claimed in claim 10 and claim 9, in which the measuring and operating means is responsive to the current passing through the inductor (3).

13. A circuit as claimed in any one of the preceding claims when dependent upon Claim 8 or claim 9 in which current from or to the inductor (3) is switched by the repeating switching means between a controllable uni-directional switch means, for example a transistor (4), and a uni-directional device, for example a diode (5).

14. A circuit as claimed in Claim 13 having a capacitor (6) connected across the DC terminals (7) and so arranged that when power flow is towards the DC terminals the charge on the capacitor is replenished when the uni-directional device (5) conducts but not when the uni-directional switch means (4) conducts; and when power flow is towards the AC terminals the charge on the capacitor is depleted when the uni-directional switch means (4) conducts but not when the uni-directional device (5) conducts.

15. A circuit as claimed in any one of the preceding claims when dependent upon Claim 2 including means for altering the delay angle of the thyristors in the bridge (2) and/or means for controlling the frequency or mark-space ratio of the repeating switching means (4,5).

16. A circuit as claimed in any one of the preceding claims including a contactor (10) positioned in lines connecting the AC terminals (1) to the rectifier/inverter (2).

17. A circuit as claimed in Claim 16 including a static load (11), for example a resistor or resistors, positioned so that when the contactor (10) is closed the load resistor is isolated, but when the contactor is open the rectifier/inverter (2) is connected to the static load.

FIG 1

FIG 2

FIG 3

FIG 4